# EUROPEAN PATENT APPLICATION

(11) **EP 4 120 157 A1**
(43) Date of publication of application: **18.01.2023**
(21) Application number: 21184990.6
(22) Date of filing: 12.07.2021
(51) Int. Cl.: G06Q 10/06, G08B 21/24

(54) **ATTENDANCE TRACKING DEVICE**

(71) Applicant: Optanium GmbH, 61184 Karben (DE)
(72) Inventor: NEBEL, Marcel, 61184 Karben (DE)
(74) Representative: Maikowski & Ninnemann Patentanwälte Partnerschaft mbB

(57) **Abstract**

The invention relates to an attendance tracking device for keeping a restroom cleaning log, comprising:
a radio-frequency, RF, module configured to periodically send beacon signals, and to receive at least one response signal from a mobile device of a user;
an electrophoretic display comprising a display controller and memory; and
wherein the display controller is configured to execute the steps of:
causing the RF module to periodically send beacon signals,
detecting a received response signal from the mobile device,
creating an attendance log including time stamp information regarding the presence of the mobile device, and
triggering an update of the electrophoretic display to display the attendance log. The invention also relates to a mobile device, a system comprising the attendance tracking device and the mobile device, and methods for operating the attendance tracking device and the mobile device.

## Description

The invention relates to an attendance tracking device for keeping a restroom cleaning log, a mobile device, a system comprising the attendance tracking device and the mobile device, and methods for operating the attendance tracking device and the mobile device.

Public or commercial restrooms, which are also often referred to as washrooms, typically include tiled floors and walls, appliances such as toilets, urinals and sinks with faucets. Consumables and dispensers accompany the appliances such as toilet paper, soap, paper towels, etc. Adequately maintaining the restroom so that the restroom is consistently kept clean and enough consumables are kept in stock requires frequent visits by a restroom attendant.

Therefore, the restroom attendant will make periodic visits to the restroom for inspection and/or cleaning. Conventionally, a paper log is kept in the restroom, such as for example at the back of the restroom door, where the restroom attendant can manually enter the dates, times and duration of the cleaning and inspection visits. Unfortunately, by keeping a paper log, attendance events might not always be entered correctly, or false attendance events might be entered with fraudulent intent.

To overcome these issues with paper logs, automated inspection and recordkeeping devices and systems are nowadays often used to replace paper logs.

Such a system is, for example, described in US 2010/299179 A1. The system includes a portable data terminal in communication with a data network, and a web interface for accessing an internet or intranet connection to a remote data storage device.

However, the systems known in the prior art require an external power source and need to maintain a data connection with an external device, such as an external server. Even if batteries would be used as power sources, the power consumption would still be quite high so that it would be necessary to frequently replace the batteries.

Therefore, it is an object of the instant invention to provide an attendance tracking device that can be operated in a stand-alone manner without requiring a constant data connection to a server, that requires minimum power so the device can be operated with a battery for long time-periods without recharging, and that creates, maintains and presents attendance logs in a clearly arranged manner.

This object is achieved by means of an attendance tracking device comprising the features of claim 1.

Accordingly, an attendance tracking device is described for keeping a restroom cleaning log, the attendance tracking device comprising:
a radio-frequency, RF, module configured to periodically send beacon signals, and to receive at least one response signal from a mobile device of a user;
an electrophoretic display comprising a display controller and a memory; and
wherein the display controller is configured to execute the steps of:
   causing the RF module to periodically send beacon signals,
   detecting a received response signal from the mobile device,
   creating an attendance log including time stamp information regarding the presence of the mobile device, and
   triggering an update of the electrophoretic display to display the attendance log.

All components of the described attendance tracking device can be arranged in a housing which can be attached to a door, a wall or to a different location in the restroom.

The processor causes the RF module to send periodic beacon signals at a predetermined time interval. The predetermined interval can be, in one example, set to one second, so that the RF module sends out one beacon signal per second, but otherwise remains idle when no response to the beacon signal is received from the mobile device.

The mobile device can be a computer small enough to hold and operate in a hand of a user, such as a restroom attendant, and can run a mobile operating system that allows third-party programs, which can be also referred to as "Apps" to be installed and executed. The mobile device can include at least one RF module capable of receiving the beacon signals from the attendance tracking device. In examples the mobile device and the attendance tracking device can use the same communication standard to communicate. The mobile device can be a tablet computer, a mobile phone, a smart phone, a wearable computer such as a smart watch, etc. The mobile device can be typically kept on the body of the restroom attendant, such as in a pocket of the user when the user enters the range of the attendance tracking device. The range of the attendance tracking device can depend on the communication standard used, the signal strength, environmental influences such as the material of the walls, the steel construction of a building etc. Therefore, the operating range of the devices can be in the region of a few meters up to hundreds of meters.

Upon recognizing the beacon signal, which may comprise a unique ID of the attendance tracking device, the mobile device can send a response signal to the attendance tracking device which can comprise a unique ID of the user and/or the mobile device, respectively, and a command for triggering an update of the display to display an attendance log.

In examples of the invention, the mobile device can determine that the restroom has been attended to when a certain amount of beacon signals had been received, i.e. when a predetermined threshold time duration of periodically receiving beacon signals from the attendance tracking device has been exceeded. The correspondingly sent response signal can then trigger the attendance tracking device to create an attendance log including time stamp information regarding the presence of the user.

The predetermined threshold time duration can be set to an average time duration, the restroom attendance needs for cleaning/re-stocking the restroom.

The time stamp information can include information regarding the date when a response signal was received, the time span indicating how long the user spent in the restroom, the time instance when the last response signal was received, etc.

The processor can then trigger the display controller to update the electrophoretic display to display the attendance log when the predetermined threshold time duration is exceeded.

The term "electrophoretic display" can be also used herein to refer to an electronic paper display, which can be also referred to as e-paper display, since such displays mimic the appearance of ordinary ink on paper and reflect light like paper. Advantageously, most electrophoretic displays can hold static text and images indefinitely without requiring electricity.

The display controller can be responsible for updating the electrophoretic display, running a firmware update, loading new configuration files, calibrating a time clock, monitoring the charging level of the battery, etc.

The attendance tracking device according to the invention provides the following advantages:
The device uses low-power technology such that operating times of up to many years can be achieved without having to recharge the battery. Also, during this time, there is no need of conducting maintenance work on the attendance tracking device.

The device can be operated in a stand-alone configuration. A continuous data connection to a higher-level server device is not required.

The restroom attendant only needs to carry a mobile device along which runs a corresponding software. Manually logging in and out of a system is not necessary anymore.

Also, the attendance logs created by the attendance tracking device are difficult to tamper with. Hence, the device correctly reflects the time that the restroom attendant spent in the restroom.

In an example, the RF module comprises a Bluetooth Chip, and the beacon signal is a Bluetooth signal. In this example, the response signal received from the RF module can be also a Bluetooth signal.

For example, a standard module of Nordic Semiconductor's nRF51xxx or nRF52xxx series, which utilize Bluetooth-Stack S120 could be employed.

Advantageously, these modules are very energy efficient such that even longer operating times of the device can be achieved.

In an example, the beacon signal is sent periodically at time intervals adjustable within a range of 0,1 to 3 seconds, and a signal strength of the beacon signal is adjustable within a range of -8 to 0 dB.

Advantageously, the RF module can only switch into a sending mode when the beacon signal is sent. If above mentioned modules are used, the RF module only draws a current of 25 mA for sending. Between sending modes, the RF module can switch into a receiving mode. In the receiving mode, the RF module only draws a current of 5 mA.

In an example, the RF module comprises a WiFi Chip, and the beacon signal is a WiFi signal.

Alternatively, instead of using a Bluetooth link, communication of the attendance tracking device and the mobile device can also take place via a WiFi connection.

In an example, the beacon signal comprises a unique ID of the attendance tracking device.

Based on receiving the unique ID, the mobile device can decide whether or not to ignore the beacon signals or to respond by sending a response signal. For example, the decision could be based on whether the unique ID of the attendance tracking device is stored on the mobile device. Also, the beacon signals can optionally comprise a battery status, such as a charging level of the battery to let the mobile device know when the battery needs to be recharged or replaced.

In an example, the RF module is further configured to receive commands and data regarding:
(i) triggering an update of the electrophoretic display,
(ii) to start a firmware update of the electrophoretic display, and/or
(iii) to load configuration files into the memory of the display controller.

The RF module can receive the commands and data from the mobile device, or from a different mobile device vial the Bluetooth or WiFi connection. Upon receipt, the received commands and data can be forwarded to the display controller.

Advantageously, software updates, etc. can also wirelessly transferred onto the attendance tracking device, if needed. However, in additional or alternative examples the attendance tracking device comprises a hardware interface, such as a USB port, to transfer software updates via the hardware interface onto the attendance tracking device.

In an example, the display controller is transferred to a power saving mode following an update of the electrophoretic display, and is configured to exit the power saving mode when:
(i) response signals from the mobile device are received,
(ii) a wake-up timer expires, or
(iii) a low battery level is detected.

Advantageously, to conserve power, the display controller can be transferred to a power saving mode instead of running idle. The power saving mode can be also referred to as "sleep mode". Depending on the type of display controller used, the power consumption of the display controller can be decreased significantly. For example, if an "Expressif" ESP32 Chip comprising 320 KB RAM and a switchable 80/240 MHZ CPU clock rate is used, the current draw can be reduced to 4 uA in the power saving mode.

In an example, the attendance tracking device comprises a power supply, comprising a mobile battery, in particular a Lithium-Polymer-Battery, for providing power to the attendance tracking device.

For example, the battery can be a type LP675365JU battery by "Jauch Quartz", which is a 3,7 V and 3000 mAh Lithium-Polymer-Battery. Also, the battery can comprise shortcircuit and overload protection.

In an example, the display controller can be connected to a battery sensor that informs the display controller in case of detecting an undervoltage. As battery sensor a type LC709203FQH battery sensor of "ON Semiconductor" having a current draw of 3 uA could be used.

Also, in an alternative example, when the attendance tracking device comprises a USB interface, the power can be supplied via the USB interface. In the latter case, the use of an internal battery can be made redundant.

In an example, the electrophoretic display comprises a 7,5" display.

Advantageously, the electrophoretic display does not consume any power when in a standby mode and can be switched off by the display controller if no updates are scheduled.

In an example, the attendance tracking device comprises a real time clock, RTC, coupled to the processor.

For creating the attendance log including time stamp information, the display controller can be connected to the RTC to be able to obtain accurate time information. As RTC a type RV3028-C7 RTC of "MicroCrystal Switzerland" having a current draw of 45 nA could be used.

Advantageously, the deviation is only 1 ppm, or 1 second in 2 weeks.

Alternatively, if the accuracy of the time stamp information is of minor importance, the RTC can be dispensed with. Instead, an internal RTC of the display controller can be used, which has a deviation of 0,5 % or 7 minutes per day. However, in the latter case, a calibration function of the display controller can be used to compensate for this deviation.

In an example, the attendance tracking device comprises a wall mountable housing comprising an opening for the electrophoretic display, and enclosing at least the RF-module, the electrophoretic display, the display controller, and the memory.

The wall mountable housing can enclose all components of the attendance tracking device, and can have means, e.g. an adhesive element, to attach the housing to a wall. The housing could be made from a plastic material in an injection molding process.

The object of the invention is also achieved by a mobile device, comprising:
a radio-frequency, RF module to receive beacon signals from an attendance tracking device, in particular form an attendance tracking device as described herein, and to send at least one response signal to the attendance tracking device; and
a processor, wherein the processor is configured to execute the steps of:
   detecting periodically received beacon signals from the attendance tracking device,
   recognizing that the mobile device is in a vicinity of the attendance tracking device,
   determining that the presence of the mobile device in the vicinity of the attendance tracking device exceeds a predetermined threshold time duration, and
   causing the RF module to send a response signal to the attendance tracking device for triggering an update of the display to display an attendance log.

The mobile device can be a mobile device as described herein, e.g. a computer small enough to hold and operate in a hand of the user, such as a restroom attendant, and runs a program, or app, to allow communication with the attendance tracking device.

For communicating with the attendance tracking device, the mobile device can include at least one RF module capable of receiving the beacon signals from the attendance tracking device. Hence, the RF module of the module can include at least one Bluetooth or WiFi chip and a program executed on the processor of the mobile device can recognize that the mobile device is in a vicinity of the attendance tracking device.

For example, the mobile device can recognize that the mobile device is in the vicinity, when the signal strength of the received beacon signals exceeds a certain threshold value. The processor can then be configured to detect the beacon signals, read the unique ID conveyed in the beacons signals, check if the beacon signal is comprised within a group of beacon signals the mobile device is required to respond to, and if the presence of the mobile device in the vicinity of the attendance tracking device is determined to exceed a predetermined threshold time duration to cause the RF module to send a response signal in reply to the received beacon signals.

The response signal can also comprise commands and data regarding triggering an update of the electrophoretic display, to start a firmware update of the electrophoretic display, and/or to load configuration files into the memory of the display controller. When the response signal comprises above described commands and data, a data connection to transfer data having a size of > 1 Byte can be established between the devices.

In an example, the mobile device comprises a smart phone.

Advantageously, the program can be installed on the personal smart phone of the restroom attendant, and the smart phone can be used with the attendance tracking device.

Further, the object is achieved by an attendance tracking system for keeping a restroom cleaning log, comprising:
an attendance tracking device as described herein; and
a mobile device as described herein.

Also, the object is achieved by a method for operating an attendance tracking device for keeping a restroom cleaning log, comprising:
sending periodically, by a radio-frequency, RF, module beacon signals;
receiving a response signal, by the RF module, from a mobile device;
creating, by a display controller, an attendance log including time stamp information regarding the presence of the mobile device; and
triggering, by the display controller, an update of an electrophoretic display to display the attendance log.

Further, the object is achieved by a method for operating a mobile device to communicate with an attendance tracking device for keeping a restroom cleaning log, comprising: receiving, by a radio-frequency, RF, module periodic beacon signals from the attendance tracking device;
recognizing, by a processor, that the mobile device is in a vicinity of the attendance tracking device;
determining, by the processor, that the presence of the mobile device in the vicinity of the attendance tracking device exceeds a predetermined threshold time duration; and causing, by the processor, the RF module to send a response signal to the attendance tracking device for triggering an update of the display to display an attendance log.

The idea underlying the invention shall subsequently be described in more detail with reference to the embodiments shown in the figures. Herein:
- Fig. 1: shows a schematic view of an attendance tracking device and a mobile device;
- Fig. 2: shows a schematic view of an electrophoretic display, exemplarily displaying an attendance log;
- Fig. 3: shows method steps of a method for operating an attendance tracking device for keeping a restroom cleaning log; and
- Fig. 4: shows method steps of a method for operating a mobile device to communicate with an attendance tracking device for keeping a restroom cleaning log.

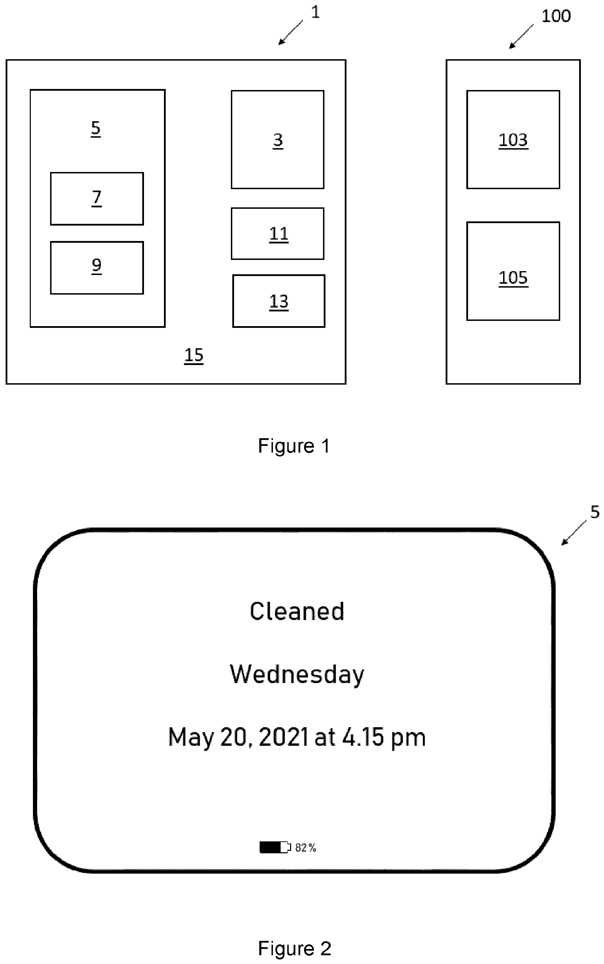

Figure 1 shows a schematic view of an attendance tracking device 1 and a mobile device 100.

As shown in figure 1, the attendance tracking device 1 comprises a radio-frequency, RF, module 3 that is configured to periodically send beacon signals, and to receive at least one response signal from the mobile device 100.

The attendance tracking device 1 also comprises an electrophoretic display 5 comprising a display controller 7 and a memory 9. The shown display controller 7 is configured to execute steps of causing the RF module 3 to periodically send beacon signals, detecting a received response signal from the mobile device 100, creating an attendance log including time stamp information regarding the presence of the mobile device, and triggering an update of the electrophoretic display 5 to display the attendance log.

Further, the attendance tracking device 1 comprises a power supply 11, and a real time clock, RTC, 13.

The components of the attendance tracking device 1 shown in figure 1 are arranged in a wall mountable housing 15.

The mobile device 100 shown in figure 1 comprises a RF module 103, and a processor 105.

Figure 2 shows a schematic view of an electrophoretic display 5, exemplary displaying an attendance log. The shown attendance log comprises information about a certain event when the electrophoretic display 5 was last updated. The presented information are only exemplarily and in embodiments less ore more information can be shown, such as for example, an ID of the restroom attendant, and miniature tiles providing information about previous events.

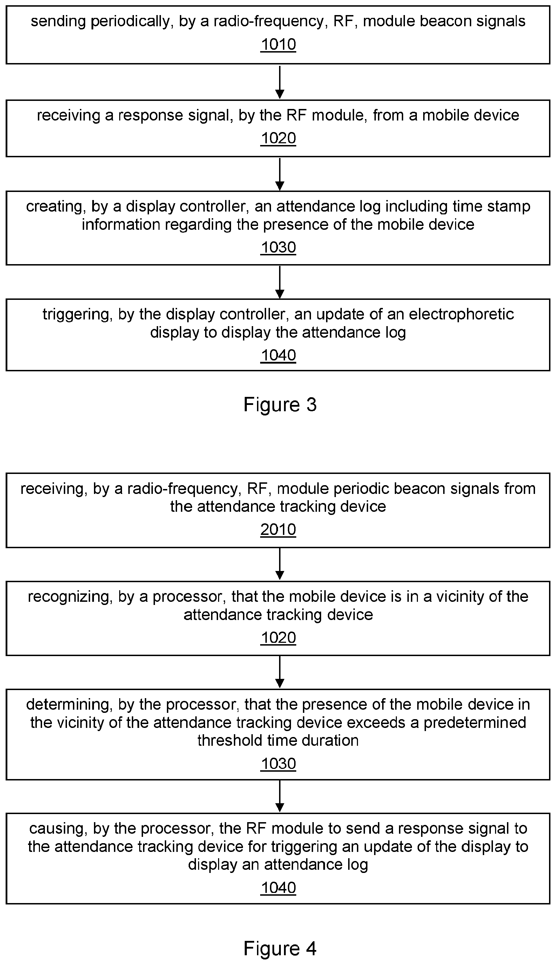

Figure 3 shows method steps of a method 1000 for operating an attendance tracking device for keeping a restroom cleaning log.

The shown method 1000 comprises the steps:
sending 1010 periodically, by a radio-frequency, RF, module beacon signals;
receiving 1020 a response signal, by the RF module, from a mobile device;
creating 1030 an attendance log including time stamp information regarding the presence of the mobile device; and
triggering 1040 an update of an electrophoretic display to display the attendance log.

Figure 4 shows method steps of a method 2000 for operating a mobile device to communicate with an attendance tracking device for keeping a restroom cleaning log.

The shown method 2000 comprises the steps:
receiving 2010, by a radio-frequency, RF, module periodic beacon signals from the attendance tracking device,
recognizing 2020, by a processor, that the mobile device is in a vicinity of the attendance tracking device,
determining 2030, by the processor, that the presence of the mobile device in the vicinity of the attendance tracking device exceeds a predetermined threshold time duration; and causing 2040, by the processor, the RF module to send a response signal to the attendance tracking device for triggering an update of the display to display an attendance log.

### Numerals

- 1: Attendance Tracking Device
- 3: RF Module
- 5: Electrophoretic Display
- 7: Display Controller
- 9: Memory
- 11: Power Supply
- 13: Real Time Clock
- 15: Housing

- 100: Mobile Device
- 103: RF Module
- 105: Processor

- 1000: Method for Operating an Attendance Tracking Device
- 1010: Sending
- 1020: Receiving
- 1030: Creating
- 1040: Triggering

- 2000: Method for Operating a Mobile Device
- 2010: Receiving
- 2020: Recognizing
- 2030: Determining
- 2040: Causing

## Claims

1. Attendance tracking device for keeping a restroom cleaning log, comprising:
a radio-frequency, RF, module configured to periodically send beacon signals, and
to receive at least one response signal from a mobile device of a user;
an electrophoretic display comprising a display controller and a memory; and
wherein the display controller is configured to execute the steps of:
causing the RF module to periodically send beacon signals,
detecting a received response signal from the mobile device,
creating an attendance log including time stamp information regarding the presence of the mobile device, and
triggering an update of the electrophoretic display to display the attendance log.

2. Attendance tracking device according to claim 1, **characterized in that** the RF module comprises a Bluetooth Chip, and the beacon signal is a Bluetooth signal.

3. Attendance tracking device according to claim 2, **characterized in that** the beacon signal is sent periodically at time intervals adjustable within a range of 0,1 to 3 seconds, and a signal strength of the beacon signal is adjustable within a range of - 8 to 0 dB.

4. Attendance tracking device according to claim 1, **characterized in that** the RF module comprises a WiFi Chip, and the beacon signal is a WiFi signal.

5. Attendance tracking device according to any of claims 1 to 4, **characterized in that** the beacon signal comprises a unique ID of the attendance tracking device.

6. Attendance tracking device according to any of claims 1 to 5, **characterized in that** the RF module is further configured to receive commands and data regarding:
(i) triggering an update of the electrophoretic display,
(ii) to start a firmware update of the electrophoretic display, and/or
(iii) to load configuration files into the memory of the display controller.

7. Attendance tracking device according to any of claims 1 to 6, **characterized in that** the display controller is transferred to a power saving mode following an update of the electrophoretic display, and is configured to exit the power saving mode when:
(i) response signals from the mobile device are received,
(ii) a wake-up timer expires, or
(iii) a low battery level is detected.

8. Attendance tracking device according to any of claims 1 to 7, **characterized by** a power supply comprising a mobile battery, in particular a Lithium-Polymer-Battery, for providing power to the attendance tracking device.

9. Attendance tracking device according to any of claims 1 to 8, **characterized in that** the electrophoretic display comprises a 7,5" display.

10. Attendance tracking device according to any of claims 1 to 9, **characterized by** a real time clock, RTC, coupled to the processor.

11. Attendance tracking device according to any of claims 1 to 10, **characterized by** a wall mountable housing comprising an opening for the electrophoretic display, and enclosing at least the RF-module, the electrophoretic display, the display controller, and the memory.

12. Mobile device, comprising:
a radio-frequency, RF module to receive beacon signals from an attendance tracking device, in particular form an attendance tracking device of any of claims 1 to 11 and to send at least one response signal to the attendance tracking device; and
a processor, wherein the processor is configured to execute the steps of:
detecting periodically received beacon signals from the attendance tracking device,
recognizing that the mobile device is in a vicinity of the attendance tracking device,
determining that the presence of the mobile device in the vicinity of the attendance tracking device exceeds a predetermined threshold time duration,
and
causing the RF module to send a response signal to the attendance tracking device for triggering an update of the display to display an attendance log.

13. An attendance tracking system for keeping a restroom cleaning log, comprising:
an attendance tracking device according to any of claims 1 to 11; and
a mobile device according to claim 12.

14. A method for operating an attendance tracking device for keeping a restroom cleaning log, comprising:
sending periodically, by a radio-frequency, RF, module beacon signals;
receiving a response signal, by the RF module, from a mobile device;
creating, by a display controller, an attendance log including time stamp information regarding the presence of a user of the mobile device; and
triggering, by the display controller, an update of an electrophoretic display to display the attendance log.

15. A method for operating a mobile device to communicate with an attendance tracking device for keeping a restroom cleaning log, comprising:
receiving, by a radio-frequency, RF, module periodic beacon signals from the attendance tracking device;
recognizing, by a processor, that the mobile device is in a vicinity of the attendance tracking device;
determining, by the processor, that the presence of the mobile device in the vicinity of the attendance tracking device exceeds a predetermined threshold time duration; and
causing, by the processor, the RF module to send a response signal to the attendance tracking device for triggering an update of the display to display an attendance log.
